# EUROPEAN PATENT SPECIFICATION

(11) **EP 2 922 047 B1**
(45) Date of publication and mention of the grant of the patent: **22.02.2017**
(21) Application number: 15158084.2
(22) Date of filing: 06.03.2015
(51) Int. Cl.: G08G 5/00

(54) **System and method for optimizing aircraft lateral and vertical trajectory for published procedures**
System und Verfahren zur Optimierung der lateralen und vertikalen Flugbahn eines Flugzeugs für veröffentlichte Verfahren
Système et procédé d'optimisation de trajectoire latérale et verticale d'un aéronef pour procédures publiées

(30) Priority: 18.03.2014 US 201414218158
(43) Date of publication of application: 23.09.2015
(73) Proprietor: Honeywell International Inc., Morris Plains, NJ 07950 (US)
(72) Inventor: Seastrand, Michael R., Morristown, NJ New Jersey 07962-2245 (US); Rumbo, Jim, Morristown, NJ New Jersey 07962-2245 (US)
(74) Representative: Houghton, Mark Phillip

(56) References cited:
- US-A1- 2007 078 572
- US-A1- 2007 219 678
- US-A1- 2008 294 335

## Description

### TECHNICAL FIELD

The exemplary embodiments described herein generally relate to flying published aircraft procedures and more particularly to optimizing aircraft trajectory for published procedures.

### BACKGROUND

In a modern commercial aircraft, a flight crew makes flight plan entries and modifications through a flight management system (FMS). The FMS receives inputs related to the desired destination, and the FMS builds a flight plan based on the inputs. The flight plan typically includes published departures, arrivals, and approaches, and includes a plurality of legs, defined by waypoints, that correspond to straight segments to be flown by the aircraft. At times, the transition between legs results in the FMS displaying a flight plan that causes excursions by the aircraft from the published desired flight path, particularly when flying at increased speeds. When confronted with these excursions between legs, the aircraft flies a path that is different from the path defined by a published procedure. The aircraft then corrects itself and returns to the flight plan. This can result in a level of uncertainty for the pilot since the aircraft has periods in which the aircraft may not be flying according to the published and predetermined flight path.

Within current airborne FMSs that construct and "freeze" the lateral path, excursions from the intended path of the published terminal area procedure can exist for arrival and approach legs, primarily due to inadequately or inappropriately coded procedures, or due to a lack of appropriate speed and altitude controls (constraints) on the waypoints of the published procedures.

For example, FIG. 1 shows an exemplary published approach 100 from waypoint WPT1 to the runway 101. The route includes legs 102-107 as defined by the waypoints WPT1-WPT6 and the runway 101. If the aircraft is at a substantially higher altitude, for example 12,000 feet (FIG. 2), than a published altitude of 8,000 feet, the true airspeed of the aircraft will be higher (for example 210 knots in the example of FIG. 3) than the true airspeed (180 knots) considered when designing the published approach. FIG. 4 illustrates an example of how the aircraft at this higher true airspeed will deviate from the desired flight path in making the turn (leg 103), causing an overshoot region 110, or excursion from the desired flight path.

Accordingly, it is desirable to provide a system and method for minimizing excursions from the intended path of published procedures that lack adequate definition. Furthermore, other desirable features and characteristics of the exemplary embodiments will become apparent from the subsequent detailed description and the appended claims, taken in conjunction with the accompanying drawings and the foregoing technical field and background.

US2007219678A1 discloses a method of assisting in the navigation of an aircraft with an updating of the flight plan. The method comprises updating a flight plan according to a new clearance received on board by a ground/onboard communication system. The clearance comprises an action conditional on the flight plan linked to a floating point of the path defined by an altitude constraint of the aircraft; on receipt of the new clearance, the update is performed directly by means of the FMS linked to the communication system. This is a predictive method.

### BRIEF SUMMARY

The present invention provides a method of determining a flight plan for an aircraft, according to claim 1 of the appended claims.

The invention further provides a system for determining a flight plan for an aircraft, according to claim 12 of the appended claims.

A system and method are provided for minimizing excursions from the intended path of published procedures that lack adequate definition.

In another exemplary embodiment, a method of determining pseudo constraints for a predetermined flight plan for an aircraft, the method comprising, in sequence: a) initializing a plurality of legs comprising the flight plan; b) initializing performance predictions for the aircraft flying the flight plan; c) initializing the pseudo constraints to null or undefined values; d) generating a flyable lateral path for the aircraft; e) generating a vertical path for the aircraft; f) determining lateral path excursions from the legs based on the flyable lateral path and the vertical path; g) counting the excursions which qualify for a pseudo-constraint; h) stopping if the count is not greater than zero, or determining a new pseudo constraint if the count is greater than zero; i) applying the pseudo constraint to an associated leg; j) returning to step c if there is a pseudo constraint restart event; k) returning to step b if aircraft performance prediction initialization data is changed; and 1) returning to step a if the flight plan legs are changed, or returning to step d if the leg is not changed.

In yet another exemplary embodiment, a system for determining pseudo constraints for a predetermined path for a vehicle, the system comprising a flight management system configured to determine a path having a plurality of legs; and a processor in operable communication with the flight management system and configured to determine if an excursion from at least one of the legs exists; determine a pseudo constraint if there is an excursion; and apply the pseudo constraint within the flight management system for at least one leg.

### BRIEF DESCRIPTION OF THE DRAWINGS

The present invention will hereinafter be described in conjunction with the following drawing figures, wherein like numerals denote like elements, and

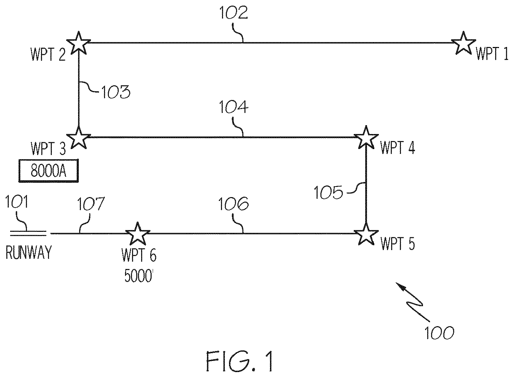

FIG. 1 is a depiction of a known aircraft lateral path representing a published aircraft procedure;

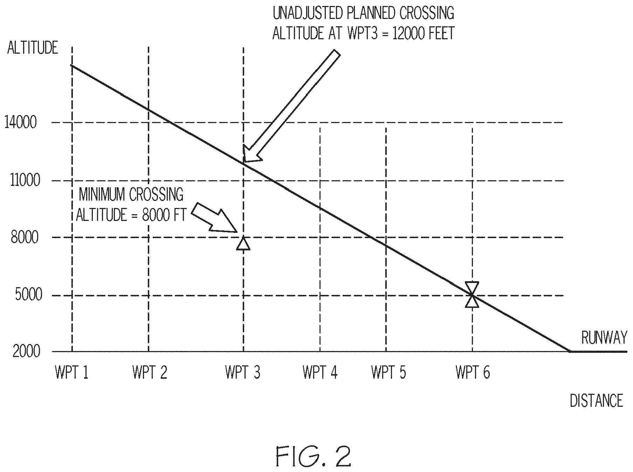

FIG. 2 is a graphic depicting aircraft altitude in which an excursion from the published aircraft procedure may result;

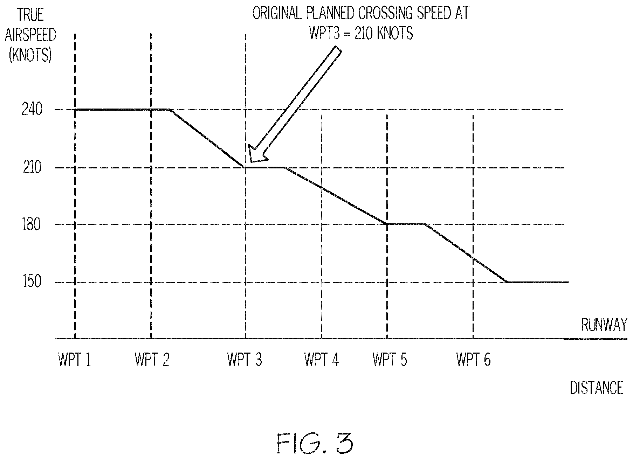

FIG. 3 is a graphic depicting aircraft velocity situations in which an excursion from the published aircraft procedure may result;

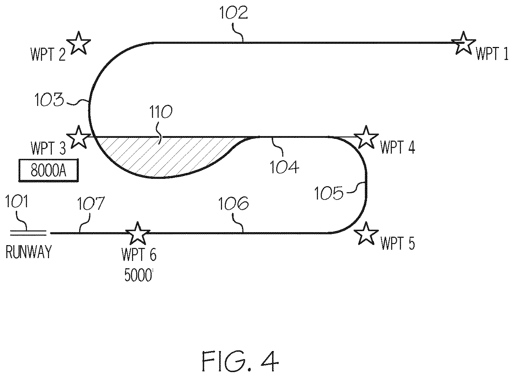

FIG. 4 is a graphic depicting aircraft lateral path situations including an excursion from the published arrival or approach;

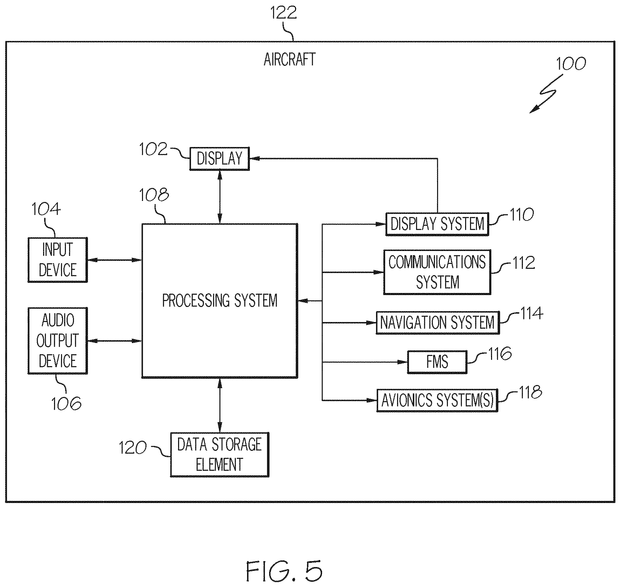

FIG. 5 is a block diagram representing the system in accordance with an exemplary embodiment;

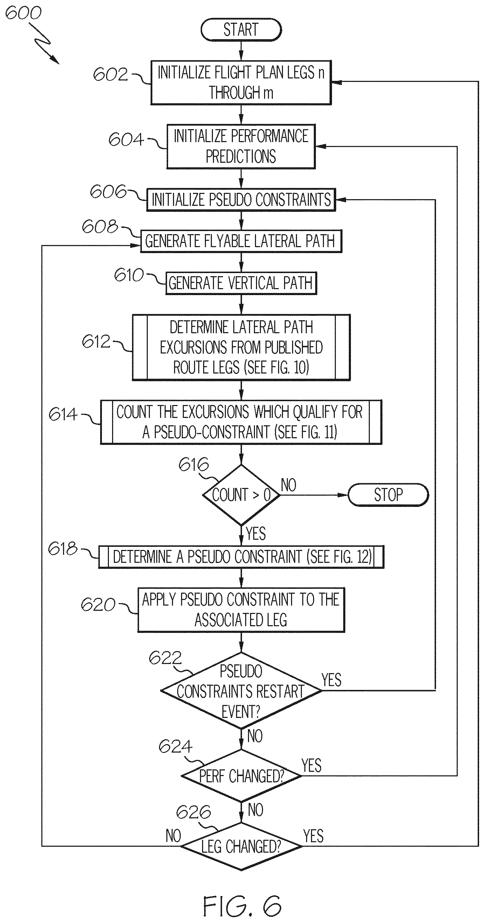

FIG. 6 is a flow chart of the steps in accordance with an exemplary embodiment implemented within a Flight Management System;

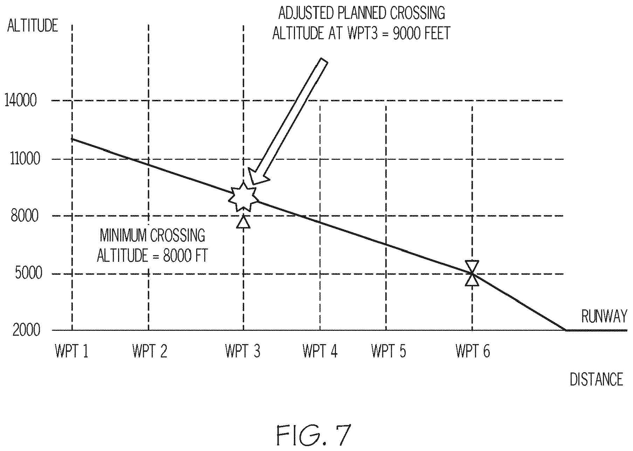

FIG. 7 is a graphic depicting aircraft vertical path situations in which an exemplary embodiment of the present invention has produced an adjusted vertical path;

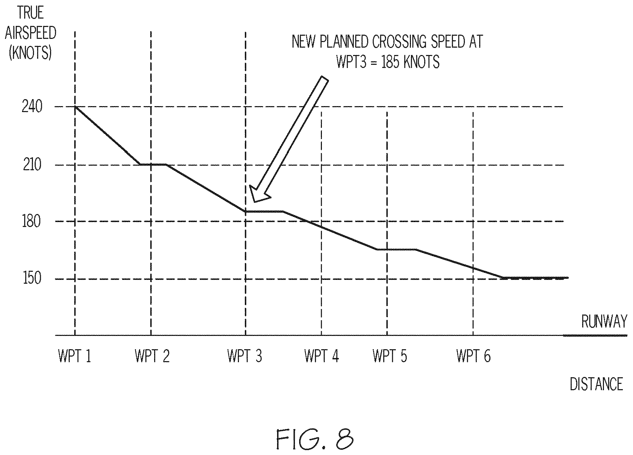

FIG. 8 is a graphic depicting aircraft velocity situations in which an exemplary embodiment of the present invention has produced an adjusted aircraft speed profile;

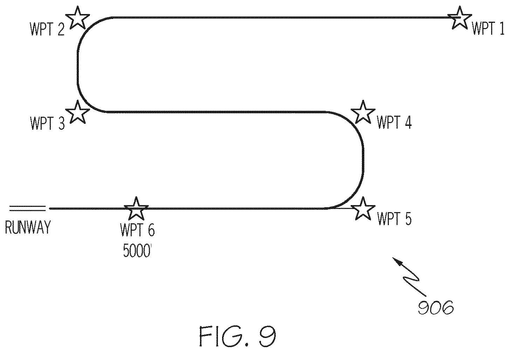

FIG. 9 is a graphic depicting aircraft lateral path situations in which an exemplary embodiment of the present invention has produced an adjusted lateral path;

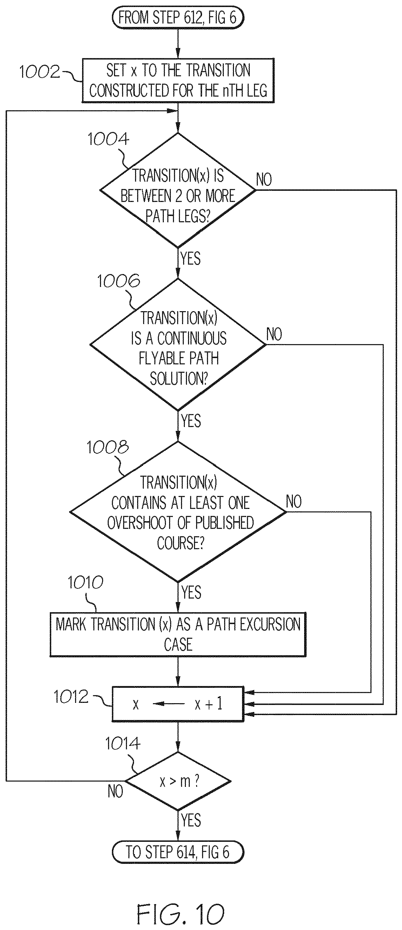

FIG. 10 is a flow chart depicting the process of determining if lateral path excursions exist from the published flight plan legs, in accordance with an exemplary embodiment of the present invention;

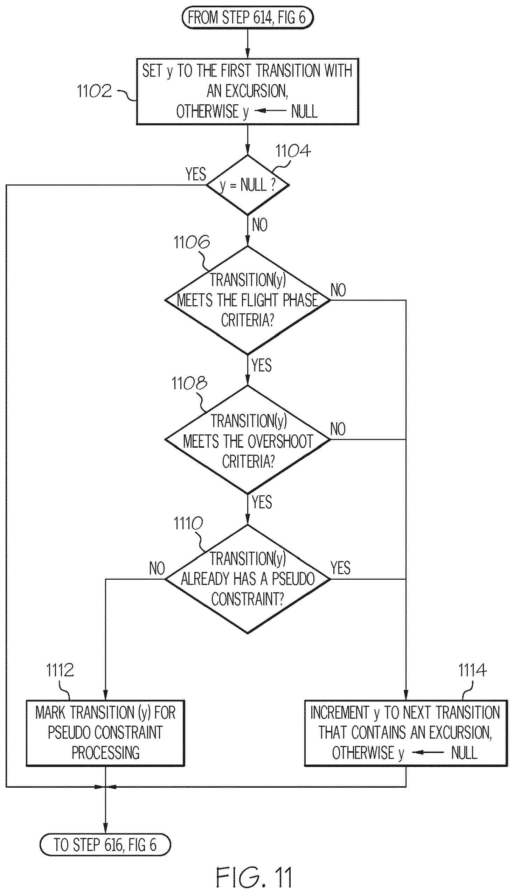

FIG. 11 is a flow chart depicting the process of determining which excursions qualify for a pseudo constraint, in accordance with an exemplary embodiment of the present invention;

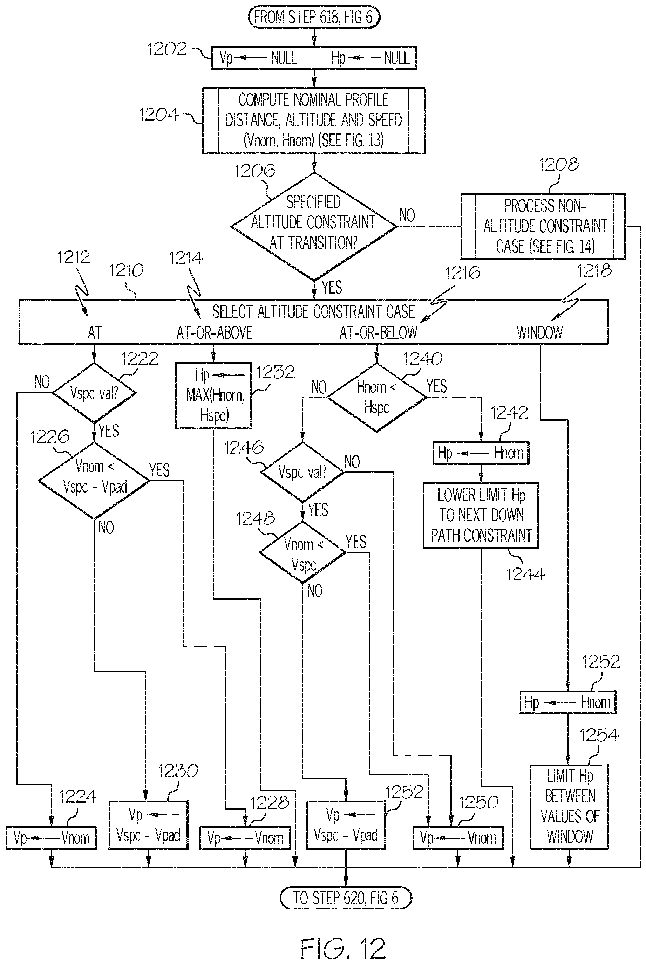

FIG. 12 is a flow chart depicting the process of determining the pseudo constraint values, in accordance with an exemplary embodiment of the present invention;

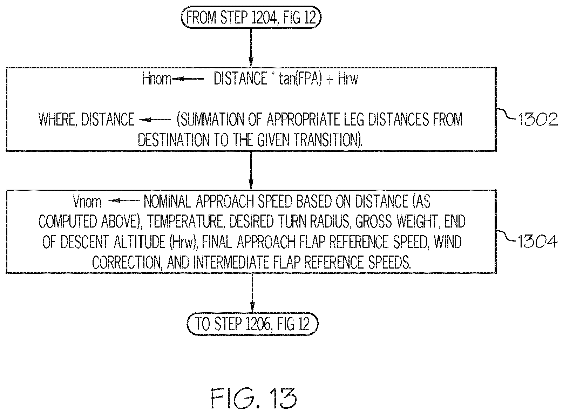

FIG. 13 is a flow chart depicting the process of computing a nominal profile distance, altitude and speed, in accordance with an exemplary embodiment of the present invention;

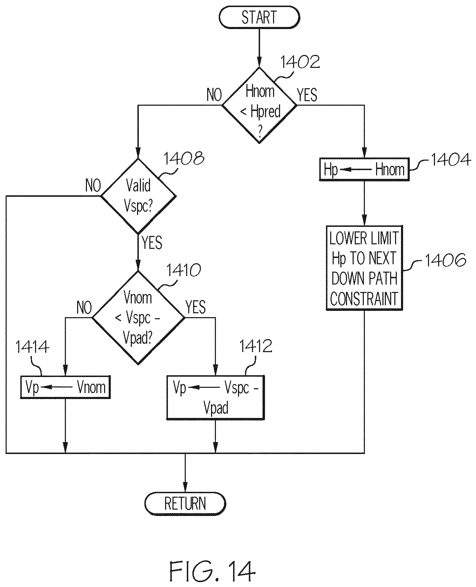

FIG. 14 is a flow chart depicting the process of determining the pseudo constraint values for the non-altitude constraint case, in accordance with an exemplary embodiment of the present invention;

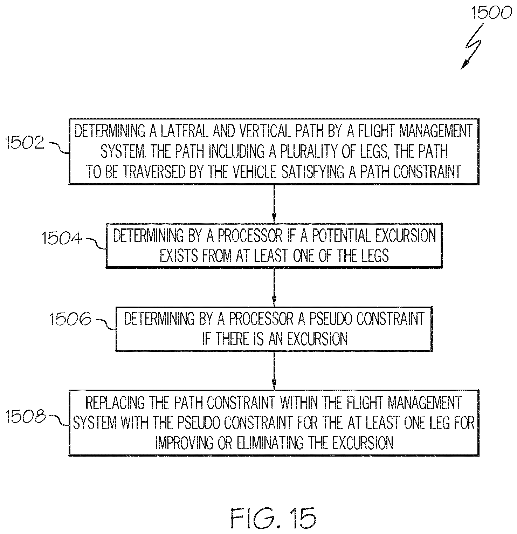

FIG. 15 is a flow chart of the steps in accordance with another exemplary embodiment; and

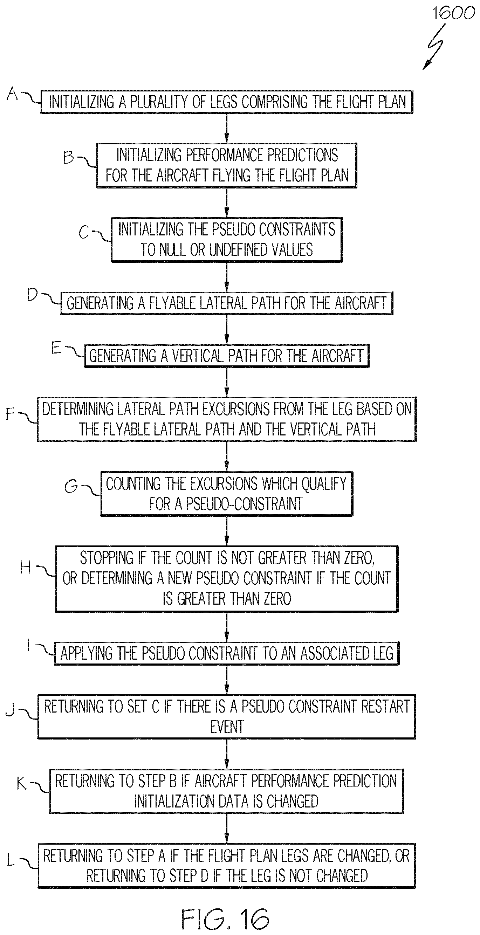

FIG. 16 is a flow chart of the steps in accordance with yet another exemplary embodiment.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments. Any of the above devices are exemplary, non-limiting examples of a computer readable storage medium.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

While the exemplary embodiments described herein refer to displaying the information on aircraft, the invention may also be applied to other vehicle display systems such as displays in sea going vessels.

Alternate embodiments of the present invention to those described below may utilize whatever navigation system signals are available, for example a ground based navigational system, a GPS navigation aid, a flight management system, and an inertial navigation system, to dynamically calibrate and determine a precise course.

In accordance with the exemplary embodiments, algorithms in accordance with the exemplary embodiments described herein are integrated into the Flight Management System (FMS) software. "Pseudo-speed/altitude constraints" are provided, which are computed values associated with route legs and stored within the FMS and used in conjunction with lateral and vertical trajectory construction. Pseudo-speed/altitude constraints do not replace published constraints, but rather enhance them. They do not override or violate any published constraint. A "pseudo-constraint" is not displayed and is not modifiable by the pilot. It is an internally computed value used to improve and optimize the planned path of the aircraft.

An example of an excursion (or deviation) from the published procedure is a lateral path overshoot at a descent waypoint where an At-or-Above type altitude constraint exists. Because the At-or-Above constraint allows the aircraft to cross at any altitude above the constraint, it is usual and normal for the descent path trajectory to be constructed with a planned crossing altitude higher, sometimes much higher, than the constraint. When this happens, the true airspeed will be higher at the waypoint than it would be if the constraint were an "At" type (the aircraft is required to cross the waypoint at the given altitude). The higher speed can result in a lateral turn radius that exceeds the airspace intended for the maneuver. In this example, building the descent profile as if there were an At constraint at the waypoint can solve the lateral path overshoot problem by reducing the airspeed for the turn and thus reducing the turn radius. The "At constraint" is the pseudo-altitude constraint in this example. There are many potential cases where an adjustment is needed to the planned lateral and vertical profile to better meet the intention of the published terminal area procedure. The exemplary embodiments described herein resolve this issue by determining the need for and applying "pseudo-speed/altitude constraints" at waypoints where the path is susceptible to overshoots or where a potential overshoot is detected.

FIG. 5 depicts an exemplary embodiment of a system 500, which may be located onboard a vehicle such as an aircraft 522. In an exemplary embodiment, the system 500 includes, without limitation, a display 502, an input device 504, a processing system 508, a display system 510, a communications system 512, a navigation system 514, a flight management system (FMS) 516, one or more avionics systems 518, and a data storage element 520 suitably configured to support operation of the system 500, as described in greater detail below. It should be understood that FIG. 5 is a simplified representation of a system 500 for purposes of explanation and ease of description, and FIG. 5 is not intended to limit the application or scope of the subject matter in any way. Practical embodiments of the system 500 and/or aircraft 522 will include numerous other devices and components for providing additional functions and features, as will be appreciated in the art. In this regard, although FIG. 5 depicts a single avionics system 518, in practice, the system 500 and/or aircraft 522 will likely include numerous avionics systems for obtaining and/or providing real-time flight-related information that may be displayed on the display 502 or otherwise provided to a user (e.g., a pilot, a co-pilot, or crew member). A practical embodiment of the system 500 and/or aircraft 522 will likely include one or more of the following avionics systems suitably configured to support operation of the aircraft 522: a weather system, an air traffic management system, a radar system, a traffic avoidance system, an enhanced ground proximity warning system, an autopilot system, an autothrust system, a flight control system, an electronic flight bag and/or another suitable avionics system.

In an exemplary embodiment, the display 502 is coupled to the display system 510. The display system 510 is coupled to the processing system 508, and the processing system 508 and the display system 510 are cooperatively configured to display, render, or otherwise convey one or more graphical representations or images associated with operation of the aircraft 522 on the display 502, as described in greater detail below. The processing system 508 is coupled to the navigation system 514 for obtaining real-time navigational data and/or information regarding operation of the aircraft 522 to support operation of the system 500. In an exemplary embodiment, the communications system 512 is coupled to the processing system 508 and configured to support communications to and/or from the aircraft 522, as will be appreciated in the art. The processing system 508 is also coupled to the flight management system 516, which in turn, may also be coupled to the navigation system 514, the communications system 512, and one or more additional avionics systems 518 to support navigation, flight planning, and other aircraft control functions in a conventional manner, as well as to provide real-time data and/or information regarding operation of the aircraft 522 to the processing system 508. In an exemplary embodiment, the input device 504 is coupled to the processing system 508, and the input device 504 and the processing system 508 are cooperatively configured to allow a user to interact with the display 502 and other elements of system 500 by providing an input to the input device 504, as described in greater detail below.

The processor 508 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration.

The display 502 is configured to provide the enhanced images to the operator. In accordance with an exemplary embodiment, the display 502 may be implemented using any one of numerous known displays suitable for rendering textual, graphic, and/or iconic information in a format viewable by the operator. Non-limiting examples of such displays include various cathode ray tube (CRT) displays, and various flat panel displays such as various types of LCD (liquid crystal display) and TFT (thin film transistor) displays. The display 502 may additionally be implemented as a panel mounted display, a HUD (head-up display) projection, or any one of numerous known technologies. It is additionally noted that the display 502 may be configured as any one of numerous types of aircraft flight deck displays. For example, it may be configured as a multi-function display, a horizontal situation indicator, or a vertical situation indicator. In the depicted embodiment, however, the display 502 is configured as a primary flight display (PFD).

In operation, the display 502 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display 502 is suitably designed to process data obtained from the sources of flight status data in the manner described in more detail herein. In particular, the display 502 can use the flight status data of the host aircraft when rendering the ITP display.

The processing system 508 generally represents the hardware, software, and/or firmware components configured to facilitate communications and/or interaction between the device 504 and the other elements of the system 500 and perform additional tasks and/or functions described in greater detail below. Depending on the embodiment, the processing system 508 may be implemented or realized with a general purpose processor, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. The processing system 508 may also be implemented as a combination of computing devices, e.g., a plurality of processing cores, a combination of a digital signal processor and a microprocessor, a plurality of microprocessors, one or more microprocessors in conjunction with a digital signal processor core, or any other such configuration. In practice, the processing system 508 includes processing logic that may be configured to carry out the functions, techniques, and processing tasks associated with the operation of the system 500, as described in greater detail below. Furthermore, the steps of a method or algorithm described in connection with the embodiments disclosed herein may be embodied directly in hardware, in firmware, in a software module executed by the processing system 508, or in any practical combination thereof. In some embodiments, the features and/or functionality of the processing system 508 may be implemented as part of the flight management system 516 or another avionics system 518, as will be appreciated in the art.

The data storage element 520 may be realized as RAM memory, flash memory, EPROM memory, EEPROM memory, registers, a hard disk, a removable disk, a CD-ROM, or any other form of storage medium known in the art. In this regard, the data storage element 520 can be coupled to the processor 508 such that the processor 508 can be read information from, and write information to, the data storage element 520. In the alternative, the data storage element 520 may be integral to the processor 508. As an example, the processor 508 and the data storage element 520 may reside in an ASIC. In practice, a functional or logical module/component of the display 502 might be realized using program code that is maintained in the data storage element 520. Moreover, the data storage element 520 can be used to store data utilized to support the operation of the display 502, as will become apparent from the following description.

In an exemplary embodiment, the display 502 is realized as an electronic display configured to graphically display flight information or other data associated with operation of the aircraft 522 (e.g., data from one or more avionics systems 512, 514, 516, 518) under control of the display system 510 and/or processing system 508. In an exemplary embodiment, the display 502 is onboard the aircraft 522 and located within the cockpit of the aircraft 522. It will be appreciated that although FIG. 5 shows a single display 502, in practice, additional display devices may be present onboard the aircraft 522. In an exemplary embodiment, the input device 504 is located within the cockpit of the aircraft 522 and adapted to allow a user (e.g., pilot, co-pilot, or crew member) to provide input to the system 500 and enables a user to interact with the elements of the system 500, as described in greater detail below. It should be appreciated that although FIG. 5 shows the display 502 and the input device 504 as being located within the aircraft 522, in practice, one or more of the display 502 and/or the input device 504 may be located outside the aircraft 522 (e.g., on the ground as part of an air traffic control center or another command center) and communicatively coupled to the remaining elements of the system 500 (e.g., via a data link).

In an exemplary embodiment, the navigation system 514 is configured to obtain one or more navigational parameters associated with operation of the aircraft 522. The navigation system 514 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 514, as will be appreciated in the art. In an exemplary embodiment, the communications system 512 is suitably configured to support communications between the aircraft 522 and another aircraft or ground location (e.g., air traffic control). In this regard, the communications system 512 may be realized using a radio communication system or another suitable data link system. In an exemplary embodiment, the flight management system 516 maintains information pertaining to a current flight plan (or alternatively, a current route or travel plan).

In accordance with one or more embodiments, the flight management system 516 (or another avionics system 518) is configured to determine, track, or otherwise identify the current and planned operating state (e.g., flight phase or phase of flight) of the aircraft 522, as described in greater detail below. As used herein, a flight phase or phase of flight of the aircraft 522 should be understood as a distinguishable segment of the operation (or distinguishable operating phase) of the aircraft 522 associated with traversing the aircraft 522 from a starting location to an ending location. For example, operation of the aircraft 522 from a starting location (e.g., a terminal at a first airport) to an ending location (e.g., a terminal at a second airport) usually comprises a plurality of flight phases, such as, for example, a standing phase (e.g., when the aircraft is stationary on the ground), a pushback or towing phase (e.g., when the aircraft is moving on the ground with assistance), a taxiing phase, a takeoff phase, a climbing phase (e.g., including the initial climb and/or climb to cruise), a cruising phase, a descent phase (e.g., from cruise altitude to initial approach), an approach phase, a landing phase, and the like. Various phases of flight are well known, and will not be described in detail herein. It should be noted that the phases of flight may be combined and/or categorized in numerous possible manners and/or each phase of flight may comprise numerous sub-phases (for example, an approach phase may include sub-phases for holding, procedure turn, flyover, orbit, and the like), and the subject matter is not intended to be limited to any particular number and/or classification of flight phases. In addition to delineated flight phases, the flight management system 516 may identify other operating states of the aircraft 522, such as, for example, operation with one or more engines disabled, operation when afterburners onboard the aircraft 522 are being utilized, transonic and/or supersonic operation of the aircraft 522, and the like.

The display system 510 generally represents the hardware, software, and/or firmware components configured to control the display and/or rendering of one or more navigational maps and/or other displays pertaining to operation of the aircraft 522 and/or avionics systems 512, 514, 516, 518 on the display 502. In this regard, the display system 510 may access or include one or more databases suitably configured to support operations of the display system 510, such as, for example, a terrain database, an obstacle database, a navigational database, a geopolitical database, a terminal airspace database, a special use airspace database, or other information for rendering and/or displaying content on the display 502.

It should be understood that FIG. 5 is a simplified representation of a system 500 for purposes of explanation and ease of description, and FIG. 5 is not intended to limit the application or scope of the subject matter in any way. In practice, the display system 500 and/or aircraft will include numerous other devices and components for providing additional functions and features, as will be appreciated in the art.

During the course of this description, like numbers may be used to identify like elements according to the different figures that illustrate the various exemplary embodiments.

In accordance with the present invention, the route between waypoints generally includes a single leg. As used herein, the term "leg" refers to a straight or curved portion of the flight plan that begins and terminates at a first and second waypoint, respectively. The system 500 can detect when the transition from one leg to another leg will result in an undesired path (an excursion) due to an undesired altitude and/or airspeed and provide instructions to the FMS to alter the flight path to achieve a desired altitude/airspeed at an associated waypoint.

FIGS. 6 and 10-16 are flow charts that illustrate exemplary embodiment of methods 600, 1500, 1600 for determining pseudo constraints for a predetermined path for a vehicle. Methods 600, 1500, 1600 represent implementations of methods for displaying aircraft approaches or departures on an onboard display of a host aircraft. The various tasks performed in connection with methods 600, 1500, 1600 may be performed by software, hardware, firmware, or any combination thereof. For illustrative purposes, the following description of methods 600, 1500, 1600 may refer to elements mentioned above in connection with additional referenced FIGS. In practice, portions of methods 600, 1500, 1600 may be performed by different elements of the described system, e.g., the processor 108, the FMS 116, or a data communication component (not shown). It should be appreciated that methods 600, 1500, 1600 may include any number of additional or alternative tasks, the tasks shown in FIGS. 6 and 10-16 need not be performed in the illustrated order, and methods 600, 1500, 1600 may be incorporated into a more comprehensive procedure or method having additional functionality not described in detail herein. Moreover, one or more of the tasks shown in FIGS. 6 and 10-16 could be omitted from an embodiment of the methods 600, 1500, 1600 as long as the intended overall functionality remains intact.

In accordance with the exemplary method of FIG. 6, a plurality of flight plan legs are initialized 602 (the flight plan legs are defined to include, for example, altitude, airspeed, and heading). Performance predictions are then initialized 604 to define the capability of the aircraft to perform the maneuvers required to adhere to the flight plan legs. Pseudo constraints are initialized 606 to define constraints, for example, airspeed and altitude at a waypoint, that may be obtained by the aircraft to avoid an excursion from the flight plan legs. A flyable lateral path is generated 608 in which the aircraft will fly in accordance with the pseudo constraints initialized in step 606 and determined and applied in steps 618 and 620. A generation 608 of a flyable lateral path is described in detail in U.S. patent 7,487,039, assigned to the assignee of the present application. A generation 610 of a vertical path (altitude) is made 610 in which the aircraft will fly in accordance with the pseudo constraints initialized in step 606 and determined and applied in steps 618 and 620. FIG. 7 (altitude of 9000 feet) and FIG. 8 (airspeed of 185 knots) illustrate the pseudo constraints determined to avoid an excursion from the flight path, while FIG. 9 is a flight path 900 (minus any excursion) flown using the generated lateral and vertical paths 608, 610.

Lateral path excursions from the published flight path are determined 612 (if any) in accordance with the flow chart of FIG. 10. Referring to FIG. 10, X is set 1002 to the transition constructed for the nth (first) leg. If transition X is connecting two or more lateral path legs (step 1004), and is a continuous flyable path 1006, and transition X contains at least one overshoot of the published flight path 1008, the transition X is identified 1010 as containing an excursion. If transition X is not connecting two or more lateral path legs (step 1004), or transition X is not a continuous flyable path 1006, or transition X does not contain at least one overshoot of the published flight path 1008, then transition X is not identified as containing an excursion. X is set to X+1 (step 1012). If X is not greater than the last leg of the flight path, the method is repeated from step 1004. If X is greater than the last leg of the flight path, the procedure returns to step 614 of FIG. 6.

In step 614, the excursions which qualify for a pseudo constraint are counted in accordance with the steps of FIG. 11. The value Y is set 1102 to the first transition with an excursion, otherwise Y is set 1102 to null. If Y is not null 1104, if the transition does not meet the flight phase criteria 1106, or if the transition does not meet the overshoot criteria 1108, or if the transition already has a pseudo constraint 1110, Y is incremented to the next transition that contains an excursion, otherwise Y is set to null 1114 and processing repeats at step 1104. If Y is null 1104, the process proceeds to step 616 of FIG. 6. If Y is not null 1104, and if the transition meets the flight phase criteria 1106, and if the transition meets the overshoot criteria 1108, and the transition does not already have a pseudo constraint 1110, the transition is marked for pseudo constraint processing 1114, and the process proceeds to step 616 of FIG. 6.

In step 616, if the count is not greater than zero, the process is halted, but if greater than zero, a pseudo constraint is determined 618 in accordance with the method of FIG. 12.

A legend for the terms used in FIG. 12 follows:
Vp = pseudo speed constraint - determined to minimize or eliminate an excursion
Hp = pseudo altitude constraint - determined to minimize or eliminate an excursion
Vspe = specified speed - a pilot entered or procedure defined "do not exceed" speed at a waypoint
Hspe = specified altitude (lower value if window constraint) - a pilot entered or procedure defined waypoint crossing altitude or range of altitudes
Vnom = nominal speed - determined by the FMS based on nominal flight parameters
Hnom = nominal altitude - determined by the FMS based on nominal flight parameters
Hpred = predicted altitude - determined by the FMS based on current flight and aircraft performance parameters
Vpad = speed pad (knots) - used to establish a threshold

Referring to FIG. 12, the pseudo speed constraint Vp and pseudo altitude constraint Hp are set 1202 to null and a nominal profile distance, altitude (Hnom), and speed (Vnom) are computed 1204 as described below in FIG. 13. If there is not a specified altitude constraint at the waypoint transition 1206, the non-altitude constraint case is processed 1208 as described below with reference to FIG. 14, and the process returns to step 620 of FIG. 6. However, if there is a specified altitude constraint at the waypoint transition 1206, a altitude constraint case is selected 1210, for example, one of AT a specific altitude 1212, AT-OR-ABOVE a specific altitude 1214, AT-OR-BELOW a specific altitude 1216, or a WINDOW between two specific altitudes 1218.

When the aircraft must pass the waypoint AT a specific altitude 1212, if there is not a value given for a specific speed Vspe 1222, the pseudo speed constraint Vp is set 1224 to the nominal speed Vnom and the process returns to step 620 of FIG. 6. If there is a value given for a specific speed Vspc 1222, and if the nominal speed Vnom is less than the specified speed Vspc minus the speed pad Vpad 1226, the pseudo speed constraint Vp is set to the nominal speed Vnom and the process returns to step 620. However, if the nominal speed Vnom is not less than the specified speed Vspe minus the speed pad Vpad 1226, the pseudo speed constraint Vp is set to the specified speed Vsp minus the speed pad Vpad 1230.

When the aircraft must pass the waypoint AT-OR-ABOVE a specific altitude 1214, the pseudo altitude constraint Hp is set to the maximum of the nominal altitude Hnom and the specified altitude Hspc 1232, and the process returns to step 620.

When the aircraft must pass the waypoint AT-OR-BELOW a specific altitude 1216, if the nominal altitude Hnom is less than the specified altitude Hspc 1240, the pseudo altitude constraint Hp is set to the nominal altitude Hnom 1242 and the value of the pseudo altitude constraint Hp is lower limited to the greatest of the remaining altitude constraints in the descent path 1244, and the process returns to step 620. If the nominal altitude Hnom is greater than or equal to the specified altitude Hspc 1240, if the value of the specified speed Vspc is not known 1246 or if the nominal speed Vnom is less than the specified speed Vspc 1248, the pseudo speed constraint Vp is set to the nominal speed Vnom 1250 and the process returns to step 620. If the nominal altitude Hnom is greater than or equal to the specified altitude Hspc 1240, the specified speed Vspc is known 1246 and the nominal speed Vnom is greater than or equal to the specified speed Vspc 1248, the pseudo speed constraint Vp is set to the specified speed Vspc minus the speed pad Vpad 1252 and the process returns to step 620.

When the aircraft must pass the waypoint between two altitudes (window) 1218, the pseudo altitude constraint Hp is set 1252 to the nominal altitude Hnom, the pseudo altitude constraint Hp is limited between the values of the window 1254, and the process returns to step 620 of FIG. 6.

Referring back to step 1204, the nominal profile distance, altitude, and speed are computed, with reference to FIG. 13, wherein Hnom = nominal altitude, FPA = assumed constant flight path angle, and Hrw = runway elevation above sea level. Hnom is set 1302 to distance times tan(FPA) plus the runway elevation Hrw, wherein distance is a summation of appropriate leg distances from destination to the given transition. For a specific leg, the curve path distance is used if the leg does not qualify for a pseudo constraint. Otherwise, a straight leg distance, for example, from WPT3 to WPT4, is used (see FIG. 4). The nominal speed Vnom is then set 1304 to the nominal approach speed, which is based on distance (as computed in step 1302), temperature, desired turn radius, gross weight, end of descent altitude (the runway elevation Hrw), final approach flap reference speed, wind correction, and intermediate flap reference speeds. The existing performance speed integration algorithms for a given aircraft may be used assuming no other altitude constraints exist except for the end of descent altitude. The process then returns to step 1206.

Referring back to step 1208, the non-altitude constraint case is processed 1208, with reference to FIG. 14. If the nominal altitude Hnom is less than the predicted altitude Hpred 1402, the pseudo altitude constraint Hp is set to the nominal altitude Hnom 1404 and the pseudo altitude constraint Hp is lower limited to the next down path constraint Hp 1406, and the process returns to step 620. If the nominal altitude Hnom is greater than or equal to the predicted altitude Hpred 1402 and the specified speed Vspc is not valid 1408, the process returns to step 620. If the specified speed Vspc is valid 1408 and the nominal speed Vnom is less than the specified speed Vspc - Vpad 1410, the pseudo speed constraint Vp is set to the specified speed Vspc minus the speed pad Vpad 1412 and the process returns to step 620. However, if the nominal speed Vnom is greater than or equal to the specified speed Vspc minus the speed pad Vpad 1410, the pseudo speed constraint Vp is set to the nominal speed Vnom 1414 and the process returns to step 620.

Returning now to step 620 of FIG. 6, the pseudo constraint is applied 620 to the associated leg, if there is a pseudo constraint restart event 622, the process returns to step 606. If there is not a pseudo constraint restart event 622, but the performance predictions initialization data is changed, the process returns to step 604. If the performance predictions initialization data is not changed, but there is a flight plan leg change, the process returns to step 602. If the flight plan leg is not changed 626, the process returns to step 608.

A more general exemplary embodiment (FIG. 15) is the method including determining 1502 a lateral and vertical path by a flight management system, the path including a plurality of legs, the path to be traversed by the vehicle satisfying a path constraint; determining 1504 by a processor if a potential excursion exists from at least one of the legs; determining 1506 by the processor a pseudo constraint if there is an excursion; and replacing 1508 the path constraint within the flight management system with the pseudo constraint for the at least one leg for improving or eliminating the excursion.

A more specific exemplary embodiment (FIG. 16) is the method of determining pseudo constraints for a predetermined flight plan for an aircraft, the method comprising, in sequence a) initializing a plurality of legs comprising the flight plan; b) initializing performance predictions for the aircraft flying the flight plan; c) initializing the pseudo constraints to null or undefined values; d) generating a flyable lateral path for the aircraft; e) generating a vertical path for the aircraft; f) determining lateral path excursions from the legs based on the flyable lateral path and the vertical path; g) counting the excursions which qualify for a pseudo-constraint; h) stopping if the count is not greater than zero, or determining a new pseudo constraint if the count is greater than zero; i) applying the pseudo constraint to an associated leg; j) returning to set c if there is a pseudo constraint restart event; k) returning to step b if aircraft performance prediction initialization data is changed; and 1) returning to step a if the flight plan legs are changed, or returning to step d if the leg is not changed.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method of determining a flight plan for an aircraft (122), the method comprising, in sequence:
a) initializing (602) a plurality of legs comprising the flight plan;
b) initializing (604) performance predictions for the aircraft flying the flight plan;
c) initializing (606) pseudo constraints to null values, wherein pseudo constraints comprise internally computed values for use in lateral and vertical trajectory construction associated with the plurality of legs;
d) generating (608) a flyable lateral path for the aircraft;
e) generating (610) a vertical path for the aircraft;
f) determining (612) lateral path excursions for each of the plurality of legs based on the flyable lateral path and the vertical path, wherein an excursion comprises a deviation from a published procedure;
g) for each lateral path excursion, determining (614) whether the lateral path excursion qualifies for a pseudo constraint and incrementing a count when the lateral path excursion qualifies for a pseudo-constraint;
h) stopping if (616) the count is not greater than zero, or determining (618) a pseudo constraint for a respective lateral path excursion if the count is greater than zero;
i) applying (620) the pseudo constraint to an associated leg;
j) returning to step c if (622) there is a pseudo constraint restart event;
k) returning to step b if (624) aircraft performance prediction initialization data is changed; and
l) returning to step a if (626) the flight plan legs are changed, or returning to step d if the leg is not changed.

2. The method of claim 1 wherein determining (612) lateral path excursions for each of the plurality of legs comprises the steps of:
marking (1010) a leg transition as including a lateral path excursion if (1004) the leg transition is between two or more path legs, if (1006) the transition is a continuous flyable path, and if (1008) the transition contains at least one overshoot of the predetermined flight plan.

3. The method of claim 2 wherein determining whether the lateral path excursion qualifies for a pseudo constraint comprises the steps of:
marking (1010) a transition for pseudo constraint processing if the transition meets flight phase criteria, if the transition meets overshoot criteria, and if the transition does not already have a pseudo constraint.

4. The method of claim 1 wherein the flight plan legs include a waypoint having a cross at limitation, the pseudo constraint is a pseudo speed constraint, and step h comprises the steps of:
computing (1202) a nominal profile including a specified speed, a nominal speed, and a speed pad;
setting (1224) the pseudo speed constraint to the nominal speed if (1222) the specified speed has not been defined;
setting (1230) the pseudo speed constraint to the specified speed minus a speed pad if (1222) the specified speed has been defined and (1226) the nominal speed is greater than or equal to the specified speed minus the speed pad; and
setting (1228) the pseudo speed constraint to the nominal speed if (1222) the specified speed has been defined and (1226) the nominal speed is less than the specified speed minus the speed pad.

5. The method of claim 1 wherein the flight plan legs include a waypoint having a cross at or above limitation and step h comprises the steps of:
computing (1204) a nominal profile including a specified altitude and a nominal altitude; and
setting (1242) the pseudo altitude constraint to the greater of the nominal altitude and the specified altitude.

6. The method of claim 1 wherein the flight plan legs include a waypoint having a cross at or below limitation and step h comprises the steps of:
computing (1204) a nominal profile including a specified speed, a nominal speed, a speed pad, a specified altitude, and a nominal altitude;
setting (1242) the pseudo altitude constraint to the nominal altitude and lower the pseudo altitude constraint to the next lower path constraint if the nominal altitude is less than the specified altitude;
setting (1250) the pseudo speed constraint to the nominal speed if the nominal altitude is greater than or equal to the specified altitude and if the specified speed does not have a value or the nominal speed is less than the specified speed; and
setting (1252) the pseudo speed constraint to the specified speed minus the speed pad if the nominal altitude is greater than or equal to the specified altitude and if the specified speed has a value and the nominal speed is greater than or equal to the specified speed.

7. The method of claim 1 wherein the flight plan legs include a waypoint having a cross within a window of altitudes limitation, the pseudo constraint is a pseudo altitude constraint, and step h comprises the steps of:
computing (1204) a nominal profile including a nominal altitude;
setting the pseudo altitude constraint to the nominal altitude; and
changing (1254) the pseudo altitude constraint to a value within the window if the nominal altitude was not within the window.

8. The method of claim 1 wherein computing a nominal profile further comprises:
setting (1302) the nominal altitude to a qualified distance times the tangent of an assumed constant flight path angle; and
setting (1304) the nominal speed to a qualified nominal approach speed based on the qualified distance.

9. The method of claim 1 wherein the flight plan legs include a waypoint having no specified altitude constraint and step h comprises the steps of:
if (1402) there is not an altitude constraint at the waypoint, processing the non-altitude constraint case including the steps of:
setting (1404) the pseudo altitude constraint to a nominal altitude; and
lowering (1406) the pseudo altitude constraint to the next level if the nominal altitude is less than the predicted altitude.

10. The method of claim 1 wherein the pseudo constraint is a pseudo speed constraint and the method further comprises:
setting (1412) the pseudo speed constraint to a specified speed minus a speed pad if a nominal altitude is greater than or equal to a predicted altitude and there is a value for the specified speed and a nominal speed is less than the specified speed minus the speed pad.

11. The method of claim 1 wherein the pseudo constraint is a pseudo speed constraint and the method further comprises:
setting (1414) the pseudo speed constraint to a nominal speed if a nominal altitude is greater than or equal to a predicted altitude and there is a value for a specified speed and the nominal speed is greater than or equal to the specified speed minus a speed pad.

12. A system for determining a flight plan for a vehicle, the system comprising:
a flight management system (116) configured to:
determine a plurality of legs comprising the flight plan; and
a processor (108) in operable communication with the flight management system and configured to:
a) initializing (602) a plurality of legs comprising the flight plan;
b) initializing (604) performance predictions for the aircraft flying the flight plan;
c) initializing (606) pseudo constraints to null values, wherein pseudo constraints comprise internally computed values for use in lateral and vertical trajectory construction associated with the plurality of legs;
d) generating (608) a flyable lateral path for the aircraft;
e) generating (610) a vertical path for the aircraft;
f) determining (612) lateral path excursions for each of the plurality of legs based on the flyable lateral path and the vertical path, wherein an excursion comprises a deviation from a published procedure;
g) for each lateral path excursion, determining (614) whether the lateral path excursion qualifies for a pseudo constraint and incrementing a count when the lateral path excursion qualifies for a pseudo-constraint;
h) stopping if (616) the count is not greater than zero, or determining a pseudo constraint for a respective lateral path excursion if the count is greater than zero;
i) applying (620) the pseudo constraint to an associated leg;
j) returning to step c if (622) there is a pseudo constraint restart event;
k) returning to step b if (624) aircraft performance prediction initialization data is changed; and
l) returning to step a if (626) the flight plan legs are changed, or returning to step d if the leg is not changed.

13. The system of claim 12 wherein the pseudo constraint comprises:
a pseudo speed constraint.

14. The system of claim 12 wherein the pseudo constraint comprises:
a pseudo altitude constraint.

## Patentansprüche

1. Verfahren zum Bestimmen eines Flugplans für ein Luftfahrzeug (122), wobei das Verfahren der Reihe nach Folgendes umfasst:
a) Initialisieren (602) von mehreren Schenkeln, die den Flugplan umfassen;
b) Initialisieren (604) von Leistungsvorhersagen für das Luftfahrzeug, das den Flugplan fliegt;
c) Initialisieren (606) von Pseudozwangsbedingungen auf Null-Werte, wobei die Pseudozwangsbedingungen intern berechnete Werte für die Verwendung bei der Erstellung einer lateralen und vertikalen Flugbahn, die den mehreren Schenkeln zugeordnet ist, umfassen;
d) Erzeugen (608) einer fliegbaren lateralen Bahn für das Luftfahrzeug;
e) Erzeugen (610) einer vertikalen Bahn für das Luftfahrzeug;
f) Bestimmen (612) von Auslenkungen der lateralen Bahn für jeden der mehreren Schenkel auf der Grundlage der fliegbaren lateralen Bahn und der vertikalen Bahn, wobei eine Auslenkung eine Abweichung von einer veröffentlichen Prozedur umfasst;
g) für jede Auslenkung der lateralen Bahn Bestimmen (614), ob die Auslenkung der lateralen Bahn für eine Pseudozwangsbedingung qualifiziert ist, und Inkrementieren einer Zählung, wenn die Auslenkung der lateralen Bahn für eine Pseudozwangsbedingung qualifiziert ist;
h) Anhalten, wenn (616) die Zählung nicht größer als Null ist, oder Bestimmen (618) einer Pseudozwangsbedingung für eine entsprechende Auslenkung der lateralen Bahn, wenn die Zählung größer als Null ist;
i) Anwenden (620) der Pseudozwangsbedingung auf einen zugehörigen Schenkel;
j) Zurückkehren zu Schritt c, wenn (622) ein Pseudozwangsbedingungneustartereignis vorliegt;
k) Zurückkehren zu Schritt b, wenn (624) die Initialisierungsdaten der Luftfahrzeugleistungsvorhersage verändert sind, und
l) Zurückkehren zu Schritt a, wenn (626) die Flugplanschenkel geändert werden, oder Zurückkehren zu Schritt d, wenn der Schenkel nicht geändert wird.

2. Verfahren nach Anspruch 1, wobei das Bestimmen (612) der Auslenkungen der lateralen Bahn für jeden der mehreren Schenkel die folgenden Schritte umfasst:
Markieren (1010) eines Schenkelübergangs, so dass er eine Auslenkung der lateralen Bahn enthält, wenn (1004) der Schenkelübergang zwischen zwei oder mehreren Bahnschenkeln liegt, wenn (1006) der Übergang eine durchgehende fliegbare Bahn ist und wenn (1008) der Übergang mindestens ein Überschwingen des vorbestimmten Flugplans beinhaltet.

3. Verfahren nach Anspruch 2, wobei das Bestimmen, ob die Auslenkung der lateralen Bahn für eine Pseudozwangsbedingung qualifiziert ist, die folgenden Schritte umfasst:
Markieren (1010) eines Übergangs zum Verarbeiten der Pseudozwangsbedingung, wenn der Übergang mit den Flugplankriterien übereinstimmt, wenn der Übergang mit den Überschwingungskriterien übereinstimmt und wenn der Übergang nicht schon eine Pseudozwangsbedingung aufweist.

4. Verfahren nach Anspruch 1, wobei die Flugplanschenkel einen Wegpunkt enthalten, der ein Kreuz auf der Eingrenzung aufweist, die Pseudozwangsbedingung eine Pseudogeschwindigkeitszwangsbedingung ist und der Schritt h die folgenden Schritte umfasst:
Berechnen (1202) eines Nennprofils, das eine festgelegte Geschwindigkeit, eine Nenngeschwindigkeit und ein Geschwindigkeitspolster enthält;
Einstellen (1224) der Pseudogeschwindigkeitszwangsbedingung auf die Nenngeschwindigkeit, wenn (1222) die festgelegte Geschwindigkeit nicht definiert worden ist;
Einstellen (1230) der Pseudogeschwindigkeitszwangsbedingung auf die festgelegte Geschwindigkeit minus ein Geschwindigkeitspolster, wenn (1222) die festgelegte Geschwindigkeit definiert worden ist und (1226) die Nenngeschwindigkeit größer oder gleich der festgelegten Geschwindigkeit minus dem Geschwindigkeitspolster ist, und
Einstellen (1228) der Pseudogeschwindigkeitszwangsbedingung auf die Nenngeschwindigkeit, wenn (1222) die eingestellte Geschwindigkeit definiert worden ist und (1226) die Nenngeschwindigkeit kleiner als die festgelegte Geschwindigkeit minus das Geschwindigkeitspolster ist.

5. Verfahren nach Anspruch 1, wobei die Flugplanschenkel einen Wegpunkt enthalten, der ein Kreuz auf oder über der Eingrenzung aufweist, und der Schritt h die folgenden Schritte umfasst:
Berechnen (1204) eines Nennprofils, das eine festgelegte Höhe und eine Nennhöhe enthält, und
Einstellen (1242) der Pseudohöhenzwangsbedingung auf die größere der Nennhöhe und der festgelegten Höhe.

6. Verfahren nach Anspruch 1, wobei die Flugplanschenkel einen Wegpunkt enthalten, der ein Kreuz auf oder unter der Eingrenzung aufweist, und der Schritt h die folgenden Schritte umfasst:
Berechnen (1204) eines Nennprofils, das eine festgelegte Geschwindigkeit, eine Nenngeschwindigkeit, ein Geschwindigkeitspolster, eine festgelegte Höhe und eine Nennhöhe enthält;
Einstellen (1242) der Pseudohöhenzwangsbedingung auf die Nennhöhe und Erniedrigen der Pseudohöhenzwangsbedingung auf die nächstniedrigere Bahnzwangsbedingung, wenn die Nennhöhe geringer als die festgelegte Höhe ist;
Einstellen (1250) der Pseudogeschwindigkeitszwangsbedingung auf die Nenngeschwindigkeit, wenn die Nennhöhe größer oder gleich der festgelegten Höhe ist und wenn die festgelegte Geschwindigkeit keinen Wert aufweist oder die Nenngeschwindigkeit geringer als die festgelegte Geschwindigkeit ist, und
Einstellen (1252) der Pseudogeschwindigkeitszwangsbedingung auf die festgelegte Geschwindigkeit minus das Geschwindigkeitspolster, wenn die Nennhöhe größer oder gleich der festgelegten Höhe ist und wenn die festgelegte Geschwindigkeit einen Wert aufweist und die Nenngeschwindigkeit größer oder gleich der festgelegten Geschwindigkeit ist.

7. Verfahren nach Anspruch 1, wobei die Flugplanschenkel einen Wegpunkt enthalten, der ein Kreuz innerhalb eines Fensters von der Einschränkung von Höhen aufweist, die Pseudozwangsbedingung eine Pseudohöhenzwangsbedingung ist und der Schritt h die folgenden Schritte umfasst:
Berechnen (1204) eines Nennprofils, das eine Nennhöhe enthält;
Einstellen der Pseudohöhenzwangsbedingung auf die Nennhöhe und
Ändern (1254) der Pseudohöhenzwangsbedingung auf einen Wert innerhalb des Fensters, wenn die Nennhöhe nicht innerhalb des Fensters ist.

8. Verfahren nach Anspruch 1, wobei das Berechnen eines Nennprofils ferner Folgendes umfasst:
Einstellen (1302) der Nennhöhe auf einen qualifizierten Abstand mal der Tangente eines angenommenen konstanten Flugbahnwinkels und
Einstellen (1304) der Nenngeschwindigkeit auf eine qualifizierte Nennannäherungsgeschwindigkeit auf der Grundlage des qualifizierten Abstands.

9. Verfahren nach Anspruch 1, wobei die Flugplanschenkel einen Wegpunkt enthalten, der keine festgelegte Höhenzwangsbedingung aufweist, und der Schritt h die folgenden Schritte umfasst:
dann, wenn (1402) keine Höhenzwangsbedingung an dem Wegpunkt vorhanden ist, Verarbeiten des Nicht-Höhenzwangsbedingungsfalls, der die folgenden Schritte enthält:
Einstellen (1404) der Pseudohöhenzwangsbedingung auf eine Nennhöhe und
Erniedrigen (1406) der Pseudohöhenzwangsbedingung auf die nächste Ebene, wenn die Nennhöhe geringer ist als die vorhergesagte Höhe.

10. Verfahren nach Anspruch 1, wobei die Pseudozwangsbedingung eine Pseudogeschwindigkeitszwangsbedingung ist und das Verfahren ferner Folgendes umfasst:
Einstellen (1412) der Pseudogeschwindigkeitszwangsbedingung auf eine festgelegte Geschwindigkeit minus ein Geschwindigkeitspolster, wenn eine Nennhöhe größer oder gleich einer vorgesagten Höhe ist und es einen Wert für die festgelegte Geschwindigkeit gibt und eine Nenngeschwindigkeit geringer als die festgelegte Geschwindigkeit minus das Geschwindigkeitspolster ist.

11. Verfahren nach Anspruch 1, wobei die Pseudozwangsbedingung eine Pseudogeschwindigkeitszwangsbedingung ist und das Verfahren ferner Folgendes umfasst:
Einstellen (1414) der Pseudogeschwindigkeitszwangsbedingung auf eine Nenngeschwindigkeit, wenn eine Nennhöhe größer als oder gleich einer vorhergesagten Höhe ist und es einen Wert für eine festgelegte Geschwindigkeit gibt und die Nenngeschwindigkeit größer oder gleich der festgelegten Geschwindigkeit minus einem Geschwindigkeitspolster ist.

12. System zum Bestimmen eines Flugplans eines Fahrzeugs, wobei das System Folgendes umfasst:
ein Flugmanagementsystem (116), das konfiguriert ist:
mehrere Schenkel zu bestimmen, die der Flugplan umfasst, und
einen Prozessor (108) in betriebstechnischer Kommunikation mit dem Flugmanagementsystem und konfiguriert:
a) mehrere Schenkel, die den Flugplan umfassen, zu initialisieren (602);
b) Leistungsvorhersagen für das Luftfahrzeug, das den Flugplan fliegt, zu initialisieren (604);
c) Pseudozwangsbedingungen auf Null-Werte zu initialisieren (606), wobei die Pseudozwangsbedingungen intern berechnete Werte für die Verwendung bei der Erstellung einer lateralen und vertikalen Flugbahn, die den mehreren Schenkeln zugeordnet ist, umfassen;
d) eine fliegbare laterale Bahn für das Luftfahrzeug zu erzeugen (608);
e) eine vertikale Bahn für das Luftfahrzeug zu erzeugen (610);
f) Auslenkungen der lateralen Bahn für jeden der mehreren Schenkel auf der Grundlage der fliegbaren lateralen Bahn und der vertikalen Bahn zu bestimmen (612), wobei eine Auslenkung eine Abweichung von einer veröffentlichen Prozedur umfasst;
g) für jede Auslenkung der lateralen Bahn zu bestimmen (614), ob die Auslenkung der lateralen Bahn für eine Pseudozwangsbedingung qualifiziert ist, und eine Zählung zu inkrementieren, wenn die Auslenkung der lateralen Bahn für eine Pseudozwangsbedingung qualifiziert ist;
h) anzuhalten, wenn (616) die Zählung nicht größer als Null ist, oder einer Pseudozwangsbedingung für eine entsprechende Auslenkung der lateralen Bahn zu bestimmen (618), wenn die Zählung größer als Null ist;
i) die Pseudozwangsbedingung auf einen zugehörigen Schenkel anzuwenden (620);
j) zu Schritt c zurückzukehren, wenn (622) ein Pseudozwangsbedingungneustartereignis vorliegt;
k) zu Schritt b zurückzukehren, wenn (624) die Initialisierungsdaten der Luftfahrzeugleistungsvorhersage verändert worden sind, und
l) zu Schritt a zurückzukehren, wenn (626) die Flugplanschenkel geändert worden sind, oder zu Schritt d zurückzukehren, wenn der Schenkel nicht geändert worden ist.

13. System nach Anspruch 12, wobei die Pseudozwangsbedingung Folgendes umfasst:
eine Pseudogeschwindigkeitszwangsbedingung.

14. System nach Anspruch 12, wobei die Pseudozwangsbedingung Folgendes umfasst:
eine Pseudohöhenzwangsbedingung.

## Revendications

1. Procédé pour déterminer un plan de vol pour un aéronef (122), le procédé comprenant les étapes, mises en oeuvre séquentiellement, consistant à :
a) initialiser (602) une pluralité de tronçons composant le plan de vol ;
b) initialiser (604) des prévisions de performance pour l'aéronef qui effectue le plan de vol ;
c) initialiser (606) des pseudo-contraintes à des valeurs nulles, les pseudo-contraintes comprenant des valeurs calculées en interne destinées à être utilisées dans la construction de trajectoires latérale et verticale associée à la pluralité de tronçons ;
d) générer (608) une trajectoire latérale susceptible d'être effectuée par l'aéronef ;
e) générer (610) une trajectoire verticale pour l'aéronef ;
f) déterminer (612) des excursions de trajectoire latérale pour chacun de la pluralité de tronçons en fonction de la trajectoire latérale susceptible d'être effectuée et de la trajectoire verticale, une excursion comprenant un écart par rapport à une procédure publiée ;
g) pour chaque excursion de trajectoire latérale, déterminer (614) si l'excursion de trajectoire latérale admet une pseudo-contrainte et incrémenter un compte si l'excursion de trajectoire latérale admet une pseudo-contrainte ;
h) arrêter si (616) le compte n'est pas supérieur à zéro, ou déterminer (618) une pseudo-contrainte pour une excursion de trajectoire latérale respective si le compte est supérieur à zéro ;
i) appliquer (620) la pseudo-contrainte à un tronçon associé ;
j) retourner à l'étape c si (622) un événement de relance de pseudo-contrainte est présent ;
k) retourner à l'étape b si (624) des données d'initialisation de prévisions de performance de l'aéronef sont modifiées ; et
l) retourner à l'étape a si (626) les tronçons du plan de vol sont modifiés, ou retourner à l'étape d si le tronçon n'est pas modifié.

2. Procédé selon la revendication 1, dans lequel l'étape consistant à déterminer (612) des excursions de trajectoire latérale pour chacun de la pluralité de tronçons comprend les étapes consistant à :
signaler (1010) une transition de tronçons comme comportant une excursion de trajectoire latérale si (1004) la transition de tronçons met en jeu au moins deux tronçons de trajectoire, si (1006) la transition est une trajectoire continue susceptible d'être effectuée et si (1008) la transition contient au moins un débordement du plan de vol prédéterminé.

3. Procédé selon la revendication 2, dans lequel l'étape consistant à déterminer si l'excursion de trajectoire latérale admet une pseudo-contrainte comprend les étapes consistant à :
signaler (1010) une transition en vue d'un traitement par pseudo-contrainte si la transition remplit des critères de phase de vol, si la transition remplit des critères de débordement et si la transition n'est pas déjà assortie d'une pseudo-contrainte.

4. Procédé selon la revendication 1, dans lequel les tronçons du plan de vol comportent un point de cheminement assorti d'une restriction de passage à une altitude prescrite, la pseudo-contrainte est une pseudo-contrainte de vitesse, et l'étape h comprend les étapes consistant à :
calculer (1202) un profil nominal comportant une vitesse spécifiée, une vitesse nominale et un provisionnement de vitesse ;
établir (1224) la pseudo-contrainte de vitesse à la vitesse nominale si (1222) la vitesse spécifiée n'a pas été définie ;
établir (1230) la pseudo-contrainte de vitesse à la vitesse spécifiée minorée d'un provisionnement de vitesse si (1222) la vitesse spécifiée a été définie et (1226) la vitesse nominale est supérieure ou égale à la vitesse spécifiée minorée du provisionnement de vitesse ; et
établir (1228) la pseudo-contrainte de vitesse à la vitesse nominale si (1222) la vitesse spécifiée a été définie et (1226) la vitesse nominale est inférieure à la vitesse spécifiée minorée du provisionnement de vitesse.

5. Procédé selon la revendication 1, dans lequel les tronçons du plan de vol comportent un point de cheminement assorti d'une restriction de passage à une altitude prescrite ou au-dessus, et l'étape h comprend les étapes consistant à :
calculer (1204) un profil nominal comportant une altitude spécifiée et une altitude nominale ; et
établir (1242) la pseudo-contrainte d'altitude à la plus grande altitude parmi l'altitude nominale et l'altitude spécifiée.

6. Procédé selon la revendication 1, dans lequel les tronçons du plan de vol comportent un point de cheminement assorti d'une restriction de passage à une altitude prescrite ou en dessous, et l'étape h comprend les étapes consistant à :
calculer (1204) un profil nominal comportant une vitesse spécifiée, une vitesse nominale, un provisionnement de vitesse, une altitude spécifiée et une altitude nominale ;
établir (1242) la pseudo-contrainte d'altitude à l'altitude nominale et abaisser la pseudo-contrainte d'altitude à la contrainte de trajectoire immédiatement inférieure si l'altitude nominale est inférieure à l'altitude spécifiée ;
établir (1250) la pseudo-contrainte de vitesse à la vitesse nominale si l'altitude nominale est supérieure ou égale à l'altitude spécifiée et si la vitesse spécifiée ne possède pas de valeur ou la vitesse nominale est inférieure à la vitesse spécifiée ; et
établir (1252) la pseudo-contrainte de vitesse à la vitesse spécifiée minorée du provisionnement de vitesse si l'altitude nominale est supérieure ou égale à l'altitude spécifiée et si la vitesse spécifiée possède une valeur et la vitesse nominale est supérieure ou égale à la vitesse spécifiée.

7. Procédé selon la revendication 1, dans lequel les tronçons du plan de vol comportent un point de cheminement assorti d'une restriction de passage dans une fenêtre d'altitudes prescrite, la pseudo-contrainte est une pseudo-contrainte d'altitude, et l'étape h comprend les étapes consistant à :
calculer (1204) un profil nominal comportant une altitude nominale ;
établir la pseudo-contrainte d'altitude à l'altitude nominale ; et
modifier (1254) la pseudo-contrainte d'altitude pour lui donner une valeur s'inscrivant dans la fenêtre si l'altitude nominale ne s'inscrivait pas dans la fenêtre.

8. Procédé selon la revendication 1, dans lequel l'étape consistant à calculer un profil nominal comprend en outre les étapes consistant à :
établir (1302) l'altitude nominale à une distance admissible multipliée par la tangente d'un angle de trajectoire de vol constante supposé ; et
établir (1304) la vitesse nominale à une vitesse d'approche nominale admissible en fonction de la distance admissible.

9. Procédé selon la revendication 1, dans lequel les tronçons du plan de vol comportent un point de cheminement assorti à aucune contrainte d'altitude prescrite, et l'étape h comprend l'étape consistant à :
si (1402) il n'existe pas de contrainte d'altitude au point de cheminement, traiter le cas d'absence de contrainte d'altitude selon les étapes consistant à :
établir (1404) la pseudo-contrainte d'altitude à une altitude nominale ; et
abaisser (1406) la pseudo-contrainte d'altitude au niveau suivant si l'altitude nominale est inférieure à l'altitude prévue.

10. Procédé selon la revendication 1, dans lequel la pseudo-contrainte est une pseudo-contrainte de vitesse et lequel procédé comprend en outre l'étape consistant à :
établir (1412) la pseudo-contrainte de vitesse à une vitesse spécifiée minorée d'un provisionnement de vitesse si une altitude nominale est supérieure ou égale à une altitude prévue et la vitesse spécifiée possède une valeur et une vitesse nominale est inférieure à la vitesse spécifiée minorée du provisionnement de vitesse.

11. Procédé selon la revendication 1, dans lequel la pseudo-contrainte est une pseudo-contrainte de vitesse et lequel procédé comprend en outre l'étape consistant à :
établir (1414) la pseudo-contrainte de vitesse à une vitesse nominale si une altitude nominale est supérieure ou égale à une altitude prévue et une vitesse spécifiée possède une valeur et la vitesse nominale est supérieure ou égale à la vitesse spécifiée minorée d'un provisionnement de vitesse.

12. Système pour déterminer un plan de vol pour un véhicule, le système comprenant :
un système de gestion de vol (116) configuré pour :
déterminer une pluralité de tronçons composant le plan de vol ; et
un processeur (108) en communication fonctionnelle avec le système de gestion de vol et configuré pour :
a) initialiser (602) une pluralité de tronçons composant le plan de vol ;
b) initialiser (604) des prévisions de performance pour l'aéronef qui effectue le plan de vol ;
c) initialiser (606) des pseudo-contraintes à des valeurs nulles, les pseudo-contraintes comprenant des valeurs calculées en interne destinées à être utilisées dans la construction de trajectoires latérale et verticale associée à la pluralité de tronçons ;
d) générer (608) une trajectoire latérale susceptible d'être effectuée par l'aéronef ;
e) générer (610) une trajectoire verticale pour l'aéronef ;
f) déterminer (612) des excursions de trajectoire latérale pour chacun de la pluralité de tronçons en fonction de la trajectoire latérale susceptible d'être effectuée et de la trajectoire verticale, une excursion comprenant un écart par rapport à une procédure publiée ;
g) pour chaque excursion de trajectoire latérale, déterminer (614) si l'excursion de trajectoire latérale admet une pseudo-contrainte et incrémenter un compte si l'excursion de trajectoire latérale admet une pseudo-contrainte ;
h) arrêter si (616) le compte n'est pas supérieur à zéro, ou déterminer une pseudo-contrainte pour une excursion de trajectoire latérale respective si le compte est supérieur à zéro ;
i) appliquer (620) la pseudo-contrainte à un tronçon associé ;
j) retourner à l'étape c si (622) un événement de relance de pseudo-contrainte est présent ;
k) retourner à l'étape b si (624) des données d'initialisation de prévisions de performance de l'aéronef sont modifiées ; et
l) retourner à l'étape a si (626) les tronçons du plan de vol sont modifiés, ou retourner à l'étape d si le tronçon n'est pas modifié.

13. Système selon la revendication 12, dans lequel la pseudo-contrainte comprend :
une pseudo-contrainte de vitesse.

14. Système selon la revendication 12, dans lequel la pseudo-contrainte comprend :
une pseudo-contrainte d'altitude.
